Europäisches Patentamt

European Patent Office

Office européen des brevets

(19)

(11) EP 0 833 263 A2

(12) EUROPÄISCHE PATENTANMELDUNG

(43) Veröffentlichungstag:
01.04.1998 Patentblatt 1998/14

(51) Int Cl.⁶: G06F 17/30

(21) Anmeldenummer: 97440084.8

(22) Anmeldetag: 23.09.1997

(84) Benannte Vertragsstaaten:
AT BE CH DE DK ES FI FR GB GR IE IT LI LU MC NL PT SE

(30) Priorität: 25.09.1996 DE 19639349

(71) Anmelder: ALCATEL ALSTHOM COMPAGNIE GENERALE D'ELECTRICITE
75008 Paris (FR)

(72) Erfinder:
• Trompf, Michael, Dr.
71282 Hemmingen (DE)

• Geiger, Tobias
70825 Münchingen (DE)
• Beterke, Bernd
71546 Aspach (DE)

(74) Vertreter: Schätzle, Albin, Dipl.-Phys. et al
Alcatel Alsthom
Intellectual Property Department,
Postfach 30 09 29
70449 Stuttgart (DE)

(54) **Datenbank, Verfahren zum Ableiten einer Datenbank und Verfahren zur Abfrage einer Datenbank**

(57) Eine erfindungsgemäße Datenbank kann mit unscharfen sprachlichen Begriffen abgefragt werden. Da die Bedeutung unscharfer sprachlicher Begriffe vom Zusammenhang, in dem sie benutzt werden, abhängt, enthält jeder Datensatz der Datenbank zu den unscharfen sprachlichen Begriffen Zugehörigkeitswerte, die angeben, zu welchem relativen Grad ein jeweiliger unscharfer sprachlicher Begriff im Vergleich mit den anderen Datensätzen auf den zugehörigen Datensatz zutrifft.

Die Datenbank ist von ersten Datensätzen abgeleitet und enthält für jeden ersten Datensatz einen zugehörigen zweiten Datensatz, in dem die Zugehörigkeitswerte gespeichert sind.

Weiter sind ein Verfahren zur Abfrage einer solchen Datenbank und ein Verfahren, um eine solche Datenbank unter Anwendung der Regeln der Fuzzy-Logik Theorie aus ersten Datensätzen abzuleiten, angegeben.

Fig.3

EP 0 833 263 A2

**Beschreibung**

Die Erfindung betrifft eine Datenbank gemäß Anspruch 1, ein Verfahren zum Ableiten einer Datenbank gemäß Anspruch 5 und ein Verfahren um auf eine Datenbankabfrage eine Liste von Datensätzen zu erhalten gemäß dem Oberbegriff des Anspruchs 7.

Ein Verfahren zur Datenbankabfrage von Datenbanken, das unscharfe sprachliche Begriffe verwendet, ist bekannt aus einem Artikel von J. Kacpryk et al, "FQUERY III+: A Human Consistant Database Querying System Based on Fuzzy Logic with Linguistic Quantifiers", Information Systems Vol. 14 No. 6, 1989, S. 443-453. Bei dem beschriebenen Verfahren werden die unscharfen sprachlichen Begriffe mit den Methoden der Fuzzy-Logik Theorie ausgewertet. Durch Anwendung vordefinierter Mitgliedschaftsfunktionen wird bei jeder Anfrage für jeden Datensatz der Datenbank ein Zugehörigkeitswert berechnet, der angibt, zu welchem Grad die zur Abfrage verwendeten unscharfen sprachlichen Begriffe auf jeden Datensatz zutreffen. Daraus wird eine Liste der Datensätze erstellt, die die Abfrage am besten erfüllen. Das Verfahren weist jedoch den Nachteil auf, daß Datenbankabfragen vor allem für umfangreiche Datenbanken langsam sind.

In den internationalen Patententanmeldungen WO 93/07576 und WO93/07575 (=EP 0 606 476 und EP 0 606 474) wird ein Verfahren zum Erzeugen einer Datenbank und ein Verfahren zum Abfragen dieser Datenbank angegeben. Beim Erzeugen der Datenbank können unscharfe sprachliche Begriffe für einzelne Attribute eines Datensatzes eingegeben werden, die dann in scharfe Repräsentativwerte umgewandelt und gespeichert werden. Die so erzeugte Datenbank enthält scharfe Daten und scharfe Repräsentativwerte für unscharfe Daten (sprachliche Begriffe). Zusätzlich kann einen Wert für die Glaubwürdigkeit dieser Daten gespeichert werden. Zur Abfrage können ebenfalls unscharfe sprachliche Begriffe aus einer Reihe möglicher unscharfer sprachlicher Begriffe verwendet werden. Unter Anwendung von vordefinierten, in einem Fuzzi-Wörterbuch gespeicherten Mitgliedschaftsfunktionen wird eine Liste von Datensätzen mit Zugehörigkeitswerten für jedes Abfragekriterium erzeugt und dem Benutzer zur Auswahl eines seiner Abfrage entsprechenden Datensatzes ausgegeben. Auch dieses Abfrageverfahren hat den Nachteil, daß es vor allem bei großen Datenbanken langsam arbeitet.

Eine Aufgabe der Erfindung ist es, eine Datenbank anzugeben, die eine im Vergleich zum Stand der Technik schnellere Datenbankabfrage mit unscharfen sprachlichen Begriffen zuläßt. Eine weitere Aufgabe der Erfindung ist es, ein Verfahren anzugeben, nach dem eine solche Datenbank aus einer Anzahl von Datensätzen erhalten werden kann. Eine andere Aufgabe der Erfindung ist es, ein Verfahren anzugeben, nach dem eine Abfrage einer solchen Datenbank mit unscharfen sprachlichen Begriffen durchgeführt werden kann.

Die Aufgabe wird bezüglich der Datenbank durch die Merkmale des Patentanspruches 1, bezüglich des Verfahrens um eine solche Datenbank zu erhalten durch die Merkmale des Patentanspruches 5 und bezüglich des Verfahrens zur Abfrage einer solchen Datenbank durch die Merkmale des Patentanspruches 7 gelöst. Vorteilhafte Ausgestaltungen sind den abhängigen Ansprüchen zu entnehmen.

Ein Vorteil einer erfindungsgemäßen Datenbank und des erfindungsgemäßen Verfahren zur Abfrage einer solchen Datenbank ist es, daß es Benutzern, die nicht über spezielles Fachwissen hinsichtlich des Inhaltes der Datenbank verfügen, ermöglicht wird, eine Datenbankabfrage durchzuführen. Daher eignet sich die Erfindung besonders für technische Datenbanken.

Ein weiterer Vorteil des neuen Verfahrens zur Abfrage einer Datenbank ist es, daß dieses Verfahren insbesondere für Benutzer, die nicht mit der Abfrage von Datenbanken vertraut sind, einfach zu handhaben ist und sich für den Einsatz als Online-Dienst eignet.

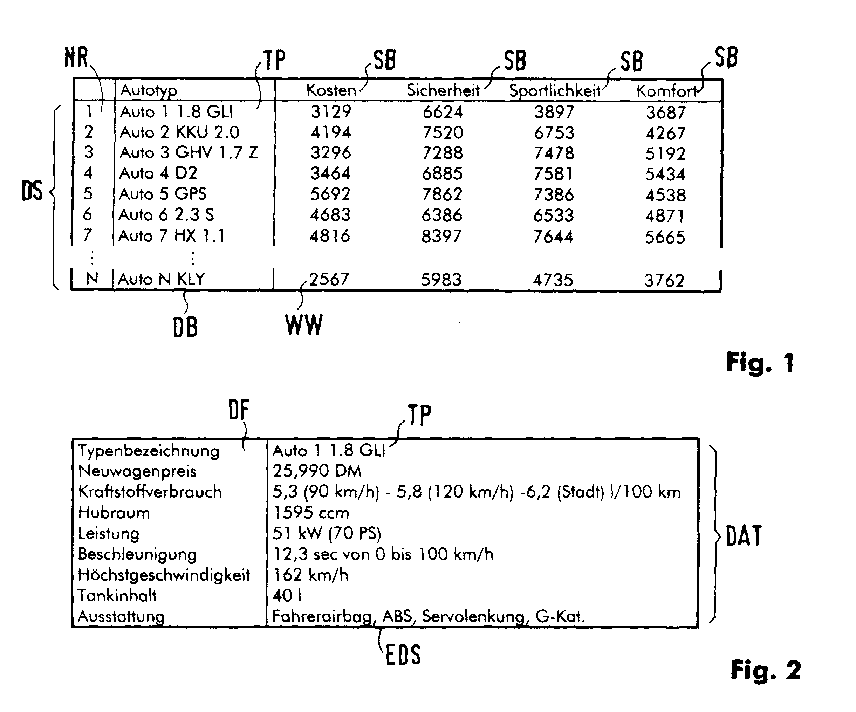

Im folgenden wird eine erfindungsgemäße Datenbank, ein Verfahren eine solche Datenbank zu erhalten und ein Verfahren zur Abfrage einer solchen Datenbank anhand der Figuren 1 bis 8 in einem Ausführungsbeispiel beschrieben. Es zeigen:

| | |
|---|---|
| Figur 1 | ein Ausführungsbeispiel einer Datenbank nach Anspruch 1, |
| Figur 2 | einen ersten Datensatz, aus dem die Datenbank abgeleitet ist, |
| Figur 3 | den schematischen Ablauf eines Verfahrens nach Anspruch 5, |
| Figur 4 | eine Mitgliedschaftsfunktion, |
| Figur 5 | einen Regelsatz, |
| Figur 6a bis 6c | detaillierter Ablauf des Verfahrens in Figur 3 |
| Figur 6d | die Anordnung der Figuren 6a bis 6c |
| Figur 7 | ein Ablaufdiagramm eines Verfahrens nach Anspruch 7, |
| Figur 8 | eine Bewertungsfunktion |

Der Erfindung ermöglicht die Abfrage einer Datenbank mit unscharfen sprachlichen Begriffen durch einen Benutzer. Die Bedeutung der unscharfen sprachlichen Begriffe hängt ab vom Zusammenhang, in dem sie benutzt werden, und vom Sprachgefühl des Benutzerkreises. So geben beispielsweise Begriffe wie Größe (groß, klein) oder Sportlichkeit (unsportlich, sehr sportlich) keine absoluten Werte an, nach denen in einer Datenbank gesucht werden könnte, sondern eine relative Wertung im Vergleich einzelner Datenbankeinträge. Um die unscharfen sprachlichen Begriffe zu einer Abfrage der Datenbank anwenden zu können, enthält jeder Datensatz der Datenbank zu den unscharfen sprachlichen Begriffen Zugehörigkeitswerte, die angeben, zu welchem Grad ein jeweiliger unscharfer sprachlicher Begriff im Vergleich mit den anderen Datensätzen auf den zugehörigen Datensatz zutrifft. Die Datenbank ist von ersten Datensätzen abgeleitet und enthält für jeden ersten Datensatz einen zugehörigen zweiten Datensatz, in dem die Zugehörigkeitswerte gespeichert sind.

Ein Ausführungsbeispiel der Erfindung ist eine Datenbank aus N verschiedenen Kraftfahrzeugen. Diese Datenbank kann mit den unscharfen sprachlichen Begriffen Kosten, Sicherheit, Sportlichkeit und Komfort abgefragt werden.

In Figur 1 ist ein Auszug aus der Datenbank DB in Form einer Tabelle dargestellt. Die Zeilen enthalten die einzelnen Datensätze DS der Datenbank DB. In der ersten Spalte steht eine laufende Nummer NR für jeden Datensatz DS. In der zweiten Spalte steht die Typenbezeichnung TP der in der Datenbank DB enthaltenen Kraftfahrzeuge. Die vier weiteren Spalten enthalten die Zugehörigkeitswerte WW jedes Datensatzes DS für die einzelnen unscharfen sprachlichen Begriffe SB. Die Spanne möglicher Zugehörigkeitswerte WW reicht im Ausführungsbeispiel von 0 bis 10000, wobei 5000 den Durchschnittswerten der in der Datenbank DB enthaltenen Kraftfahrzeuge entspricht.

Die Datenbank ist von einer Anzahl N ersten Datensätzen abgeleitet. In Figur 2 ist ein solcher erster Datensatz EDS in Form einer Tabelle dargestellt. Er enthält die Typenbezeichnung TP eines Kraftfahrzeuges und technische und kommerzielle Daten DAT zu dem Kraftfahrzeug. In der ersten Spalte stehen Datenfelder DF wie Neupreis und Kraftstoffverbrauch, in der zweiten Spalte stehen die zugehörigen Daten DAT.

Ein Zugehörigkeitswert eines in der Datenbank enthaltenen zweiten Datensatzes kann von mehreren Datenfeldern eines ersten Datensatzes abhängen. So ist beispielsweise der Zugehörigkeitswert zu dem unscharfen sprachlichen Begriff Sportlichkeit abgeleitet aus folgenden Datenfeldern der ersten Datensätze: Leistung, Beschleunigung und Höchstgeschwindigkeit. Vorzugsweise sind die Zugehörigkeitswerte durch Anwendung von Mitgliedschaftsfunktionen und Bildung von Fuzzy-Interferenzen nach den Regeln der Fuzzy-Logik Theorie (siehe z.B. A Fuzzy, Knowledge-based Support Tool for Production Operations management, C.P. Schlüter et al, Expert Systems Vol. 11 No. 1, 1994 , S. 3 bis 11) abgeleitet. Andere Möglichkeiten wären, die Zugehörigkeitswerte nach der Meinung unabhängiger Experten zu schätzen oder eine Rangliste der Kraftfahrzeuge zu jedem unscharfen sprachlichen Begriff aufzustellen und für die Zugehörigkeitswerte eine bestimmte statistische Verteilung, bespielsweise die Normalverteilung, anzunehmen.

Die ersten Datensätze können in Form einer Quelldatenbank vorliegen. In der Datenbank kann dann neben den Zugehörigkeitswerten ein Verweis, z.B. ein Zeiger, auf den zugehörigen ersten Datensatz der Quelldatenbank enthalten sein. Das hat den Vorteil, daß Speicherplatz in der Datenbank gespart wird. Eine Abfrage kann auf die Datenbank angewendet werden und als Ergebnis der Abfrage kann eine Liste erster Datensätze aus der Quelldatenbank ausgegeben werden.

Die Datenbank kann auch in jedem ihrer zweiten Datensätze zumindest einen Teil der Daten aus den ersten Datensätzen enthalten. Die ersten Datensätze werden dann nicht länger benötigt. Als Ergebnis eine Datenbankabfrage wird dann nicht eine Liste der ersten Datensätze ausgegeben, sondern eine Liste der in der Datenbank enthaltenen zweiten Datensätze.

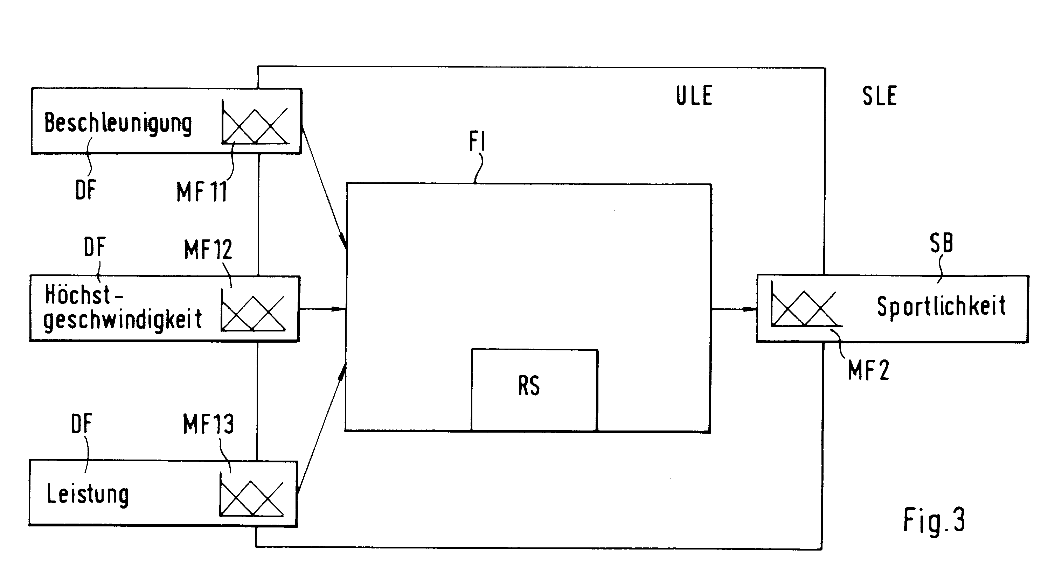

Bei einem Verfahren, um eine Datenbank aus einer Anzahl N erster Datensätze abzuleiten, werden zunächst die unscharfen sprachlichen Begriffe SB ausgewählt, zu denen für die Datenbank Zugehörigkeitswerte abgeleitet werden sollen. In dem Ausführungsbeispiel sind dies die unscharfen sprachlichen Begriffe SB Kosten, Sicherheit, Sportlichkeit und Komfort. Für jeden dieser sprachlichen Begriffe SB werden dann die in Figur 3 für den Begriff Sportlichkeit schematisch dargestellten Schritte ausgeführt.

Zuerst werden in den ersten Datensätzen die Datenfelder DF festgestellt, die Einfluß auf die Zugehörigkeitswerte haben. Für das Beispiel Sportlichkeit in Figur 3 sind dies die Datenfelder Beschleunigung, Höchstgeschwindigkeit und Leistung. Dann werden auf die Daten der festgestellten Datenfelder erste Mitgliedschaftsfunktionen MF11, MF12, MF13 angewendet, auf die im folgenden noch näher eingegangen wird. Dadurch werden sprachliche Eingangsterme erhalten, um von den Daten einer scharfen logischen Ebene SLE zu Eingangstermen einer sprachlichen, unscharfen logischen Ebene ULE zu gelangen.

Als nächstes wird anhand von Regelsätzen RS eine Fuzzy-Interferenz FI (auf die im folgenden näher eingegangen wird) der Eingangsterme gebildet, um zu Ausgangstermen der unscharfen logischen Ebene zu gelangen. Auf diese Ausgangsterme wird anschließend eine zweite Mitgliedschaftsfunktion MF2 angewendet, um die Zugehörigkeitswerte zu erhalten.

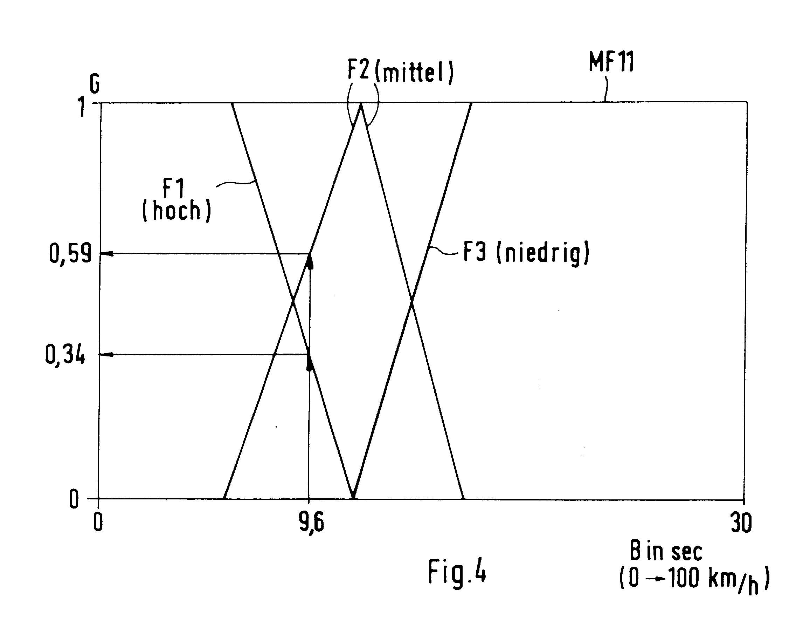

In Figur 4 ist eine Mitgliedschaftsfunktion MF11 für das Datenfeld Beschleunigung B der ersten Datensätze als Diagramm dargestellt. Das Diagramm enthält Funktionen F1, F2, F3 für drei sprachliche Eingangsterme: hoch, mittel und niedrig, was für relative sprachliche Wertungen "hohe Beschleunigung", "mittlere Beschleunigung" und "niedrige Beschleunigung" steht. Aus den drei Funktionen wird für jeden Beschleunigungswert ein Gewicht G jeder sprachlichen Wertung erhalten, welches aussagt, zu welchem Grad die sprachliche Wertung auf einen bestimmten Beschleunigungswert zutrifft. So entnimmt man der Mitgliedschaftsfunktion MF11, daß ein Beschleunigungswert von 9,6 sec (von 0 bis 100 km/h) zu einem Grad von 0.34 durch die Wertung „hohe Beschleunigung" und zu 0.59 durch die Wertung „mittlere Beschleunigung" beschrieben wird.

Solche Mitgliedschaftsfunktionen für Datenfelder werden auf der Grundlage von Fachwissen über den Inhalt der ersten Datensätze und unter Berücksichtigung des Sprachverständnisses des Benutzerkreises bezüglich der Bedeutung der sprachlichen Wertungen aufgestellt. Die Anzahl der Eingangsterme ist nicht auf drei festgelegt. So lassen sich auch Mitgliedschaftsfunktionen mit vier oder mehr Eingangstermen aufstellen. Mitgliedschaftsfunktionen lassen sich auch aus den ersten Datensätzen ableiten, wenn angenommen wird, daß diese für jede sprachliche Wertung eine vorgegebene Verteilung, beispielsweise die Normalverteilung (Gauß-Verteilung) erfüllen.

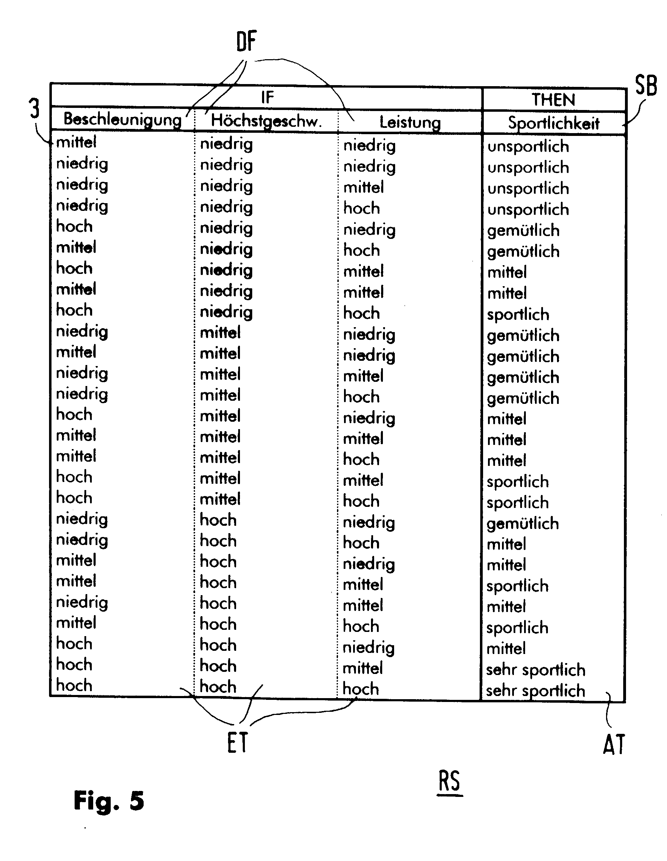

Figur 5 zeigt die Regelsätze RS für das Beispiel Sportlichkeit in Form einer Tabelle. Die Tabelle enthält alle möglichen Kombinationen von Eingangstermen ET der Datenfelder DF, die zu dem Zugehörigkeitswert für Sportlichkeit beitragen. In den drei linken Spalten stehen die Eingangsterme ET der Datenfelder DF Beschleunigung, Höchstgeschwindigkeit und Leistung, die in einer UND-Kombination dann in der rechten Spalte den Ausgangsterm AT für die Sportlichkeit ergeben. Demnach ist beispielsweise die dritte Zeile 3 der Tabelle wie folgt zu lesen: IF "mittlere Beschleunigung" UND "niedrige Höchstgeschwindigkeit" UND "niedrige Leistung", THEN Ausgangsterm für Sportlichkeit = "unsportlich".

Regelsätze für die einzelnen unscharfen sprachlichen Begriffe werden wie die Mitgliedschaftsfunktionen auf der Grundlage von Fachwissen über den Inhalt der ersten Datensätze und unter Berücksichtigung des Sprachverständnisses des Benutzerkreises aufgestellt.

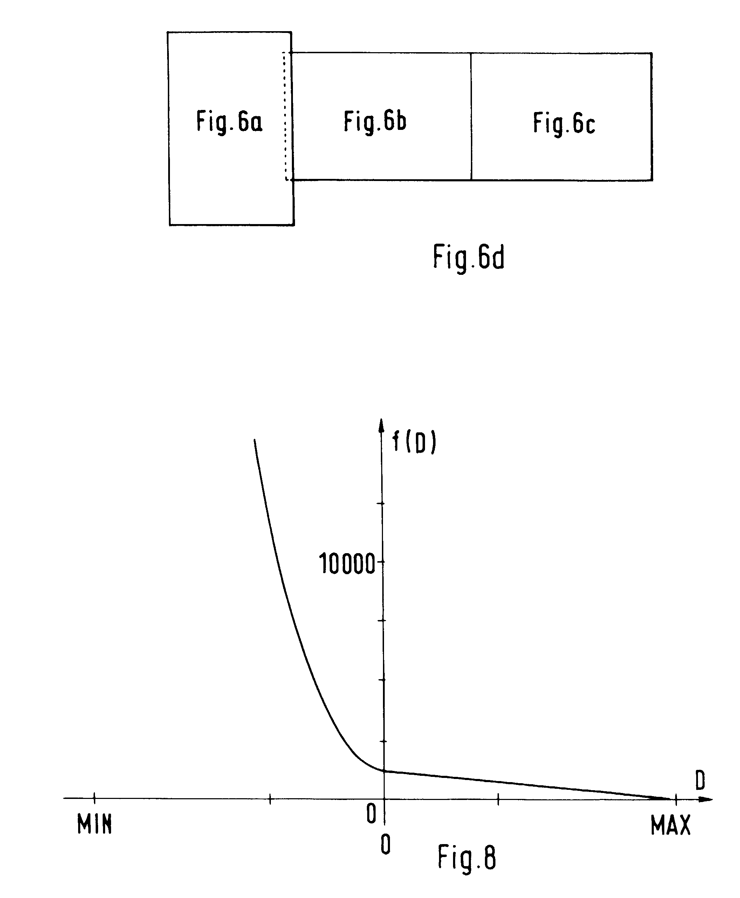

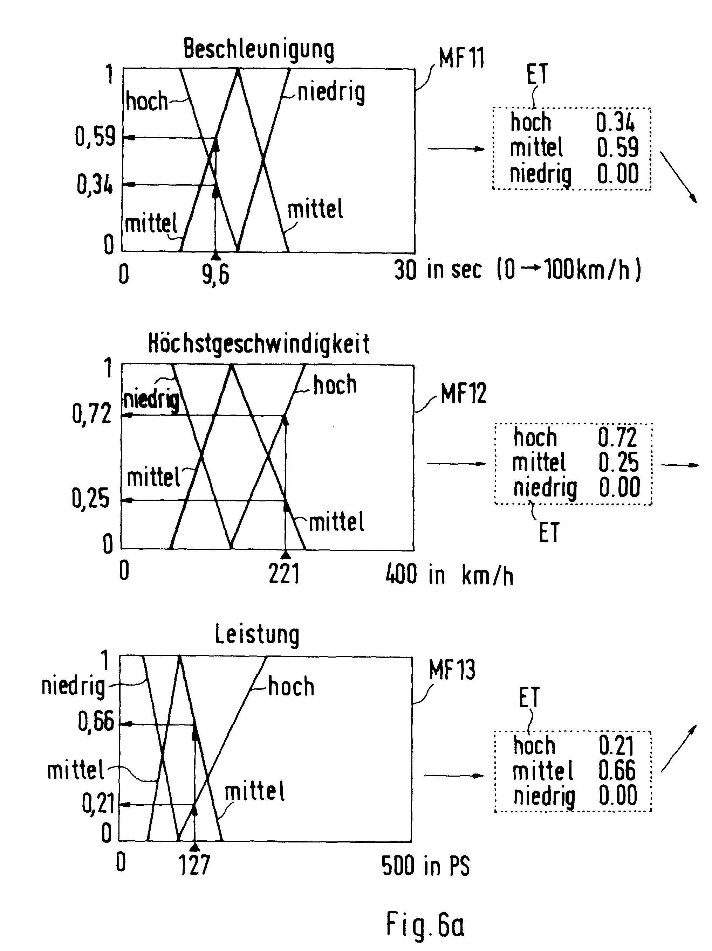

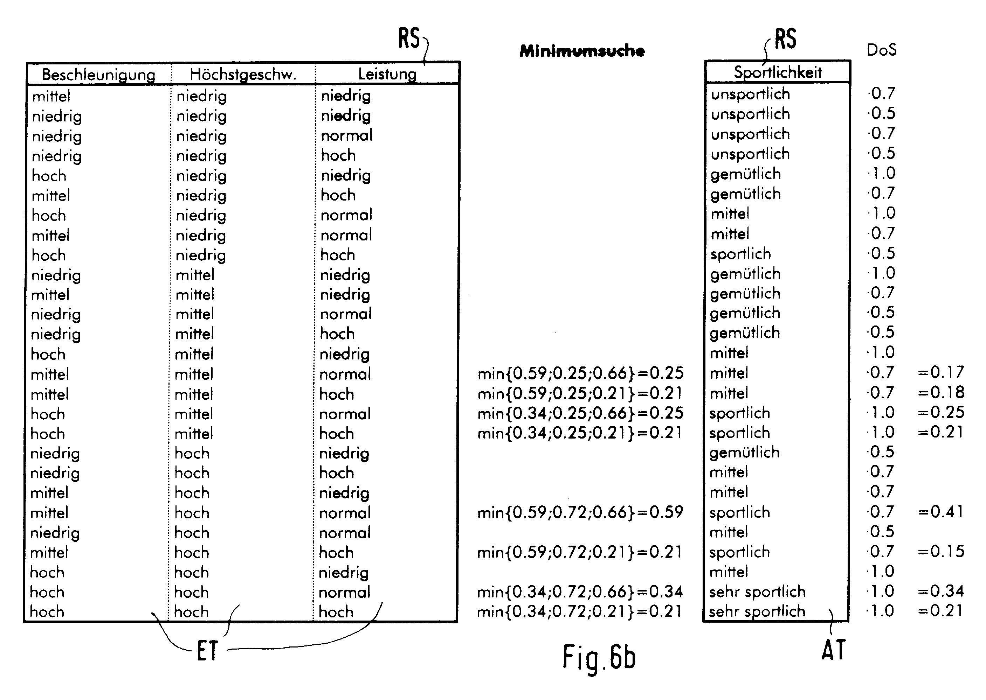

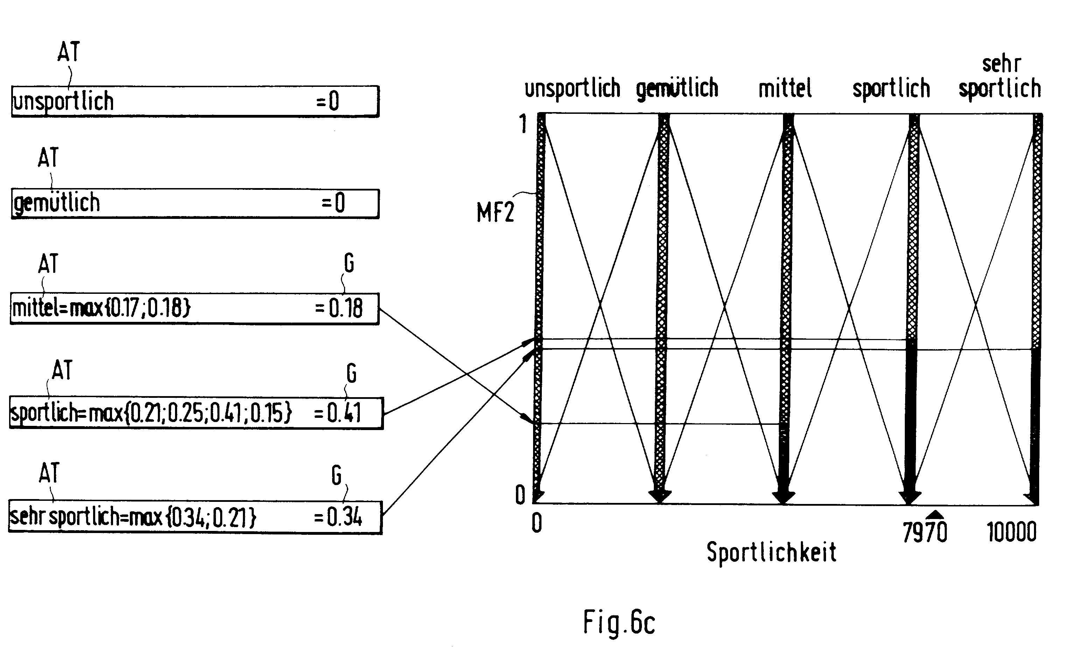

In den Figuren 6a bis 6c sind die in Figur 3 schematisch dargestellten Schritte für ein Beispiel detailliert gezeigt. Figur 6d gibt an, wie die Figuren 6a bis 6c nebeneinander zu legen sind: Figur 6a ist im Hochformat anzuordnen, rechts daran schließt Figur 6b im Querformat an. Rechts von Figur 6b ist dann Figur 6c ebenfalls im Querformat zu positionieren.

Figur 6a zeigt dabei zunächst, wie für ein bestimmtes Kraftfahrzeug aus ersten Mitgliedschaftsfunktionen MF11, MF12, MF13 Eingangsterme ET einer unscharfen logischen Ebene erhalten werden. Das Kraftfahrzeug hat eine Beschleunigung von 9,6 sec (0 - 100 km/h). Aus der ersten Mitgliedschaftsfunktion MF11 werden die Eingangsterme hoch, mittel und niedrig mit den zugehörigen Gewichten 0.34, 0.59 und 0.00 abgelesen. Analog liefert die Mitgliedschaftsfunktion MF12 für eine Höchstgeschwindigkeit von 221 km/h die Eingangsterme und Gewichte:

hoch 0.72, mittel 0.25 und niedrig 0.00,

sowie die Mitgliedschaftsfunktion MF13 für eine Leistung von 127 PS die Eingangsterme und Gewichte:

hoch 0.21, mittel 0.66 und niedrig 0.00.

Aus den Eingangstermen wird die Fuzzy-Interferenz gebildet. Dieser Schritt ist in Figur 6b dargestellt. Auf die Eingangsterme ET werden die vorgegebenen Regelsätze RS angewendet. Es werden alle Kombinationen von Eingangstermen ET unterschiedlicher Datenfelder gebildet, bei denen die Gewichte aller Eingangsterme ET ungleich 0 sind. Die Regelsätzen RS liefern zu jeder Kombination einen Ausgangsterm AT. Das Gewicht G der einzelnen Ausgangsterme AT berechnet sich nach den Regel der Fuzzy-Logik Theorie als Minimum min der Gewichte der kombinierten Eingangsterme ET. Zusätzlich kann noch wie in der Figur gezeigt ein Multiplikator DoS (Degree of Support) bei jeder Kombination auftreten. Er stellt einen Korrekturfaktor dar, um die einzelnen Regelsätze zu gewichten.

Von den Gewichten gleichnamiger Ausgangsterme AT wird nach den Regeln der Fuzzy-Logik Theorie das Maximum max gebildet. Dieser Schritt ist in Figur 6c zu sehen. Als Ergebnis der Fuzzy-Interferenz erhält man in dem Beispiel folgende Ausgangsterme AT mit den zugehörigen Gewichten G:

mittel 0.18, sportlich 0.41 und sehr sportlich 0.34.

Weiter zeigt die Figur 6c die zweite Mitgliedschaftsfunktion MF2, aus der mit den Ausgangstermen AT und deren Gewichten G der gesuchte Zugehörigkeitswert als Schwerpunkt (Center-of-Maximum-Methode) hervorgeht. Zur Bildung dieses Schwerpunktes werden die Zugehörigkeitswerte am Maximum jeder Funktion für die einzelnen Ausgangsterme mit dem Gewicht für den jeweiligen Ausgangsterm multiplizierten und aufaddiert. Das Endergebnis für den Zugehörigkeitswert der Sportlichkeit ist demnach 7970. Eine andere Möglichkeit, einen Zugehörigkeitswert zu bestimmen ist die als Center-of-Area bekannte Methode, bei der die Flächen unter den Funktionskurven berücksichtigt wird.

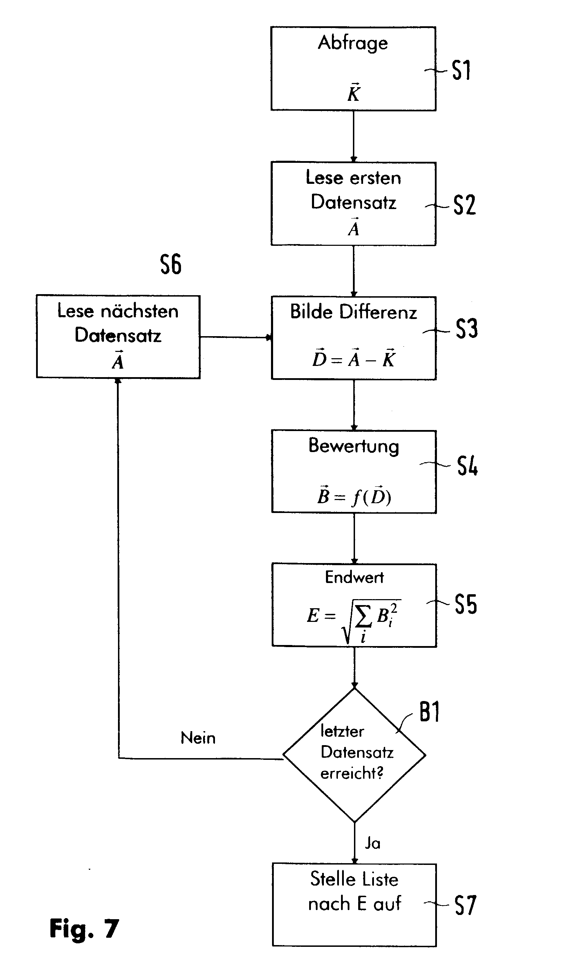

Ein Verfahren um auf eine Datenbankabfrage eine Liste von Datensätzen zu erhalten, die am besten auf die Datenbankabfrage passen, zeigt Figur 7 in einem Ablaufdiagramm. Von einem Benutzer wird in einem ersten Schritt S1 eine Datenbankabfrage gestellt. Dazu gibt der Benutzer zu den unscharfen sprachlichen Begriffen einen Zugehörigkeitswert für das von ihm gesuchte Kraftfahrzeug an. Wünscht der Benutzer beispielsweise ein sportliches aber dennoch kostengünstiges Kraftfahrzeug, so wählt er einen hohen Zugehörigkeitswert für Sportlichkeit und einen niedrigen Zugehörigkeitswert für Kosten. Die Datenbankabfrage entspricht einem Vektor $\vec{K}$, der aus den vier vom Benutzer angegebenen Zugehörigkeitswerten besteht:

$$\vec{K} = \begin{pmatrix} \text{gewünschte Kosten} \\ \text{gewünschte Sicherheit} \\ \text{gewünschte Sportlichkeit} \\ \text{gewünschter Komfort} \end{pmatrix}$$

In einem zweiten Schritt S2 wird aus der Datenbank der erste Datensatz gelesen. Dieser läßt sich ebenfalls als Vektor $\vec{A}$ darstellen, indem die in der Datenbank gespeicherten Zugehörigkeitswerte enthalten sind:

$$\vec{A} = \begin{pmatrix} \text{Kosten} \\ \text{Sicherheit} \\ \text{Sportlichkeit} \\ \text{Komfort} \end{pmatrix}$$

In einem dritten Schritt S3 wird der Differenzvektor $\vec{D}$ als Differenz zwischen dem Vektor $\vec{A}$ und dem Vektor $\vec{K}$ gebildet:

$$\vec{D} = \vec{A} - \vec{K}$$

Von besonderem Vorteil ist es, in einem vierten Schritt S4 eine Bewertungsfunktion $f$ auf den Differenzvektor $\vec{D}$ anzuwenden. Dadurch kann ein Datensatz der Datenbank bei Übererfüllung der Datenbankabfrage auf- oder bei Untererfüllung abgewertet werden. Eine mögliche Bewertungsfunktion ist in Figur 8 gezeigt. Auf der horizontalen Achse ist eine Komponente des Vektor $\vec{D}$ aufgetragen und auf der vertikalen Achse der dazugehörige Funktionswert. Da die Spanne der Werte, die die Komponenten von $\vec{A}$ und $\vec{K}$ annehmen können begrenzt ist, gibt es einen größten MAX und einen kleinsten MIN Wert, den die Komponenten von $\vec{D}$ annehmen können. Im Ausführungsbeispiel beträgt der größte Wert MAX 10000 und der kleinste Wert MIN -10000. Die in der Figur 8 gezeigte Bewertungsfunktion $f$ lautet:

$$f(D) = \begin{cases} D^2 + O \\ O - 0{,}1 \cdot D \end{cases} \text{für} \begin{matrix} D < 0 \\ D \geq 0 \end{matrix},$$

wobei O einen positiven Offsetwert bedeutet, der im Ausführungsbeispiel 1000 ist, und D eine Komponente des Vektors $\vec{D}$. Durch komponentenweises Anwenden der Bewertungsfunktion $f$ auf $\vec{D}$ erhält man den bewerteten Differenzvektor $\vec{B}$:

$$\vec{B} = f(\vec{D})$$

Der vierte Schritt kann auch entfallen, wenn es bei der Datenbankabfrage nur auf bestmögliche Übereinstimmung ankommt und eine Übererfüllung der Abfragekriterien nicht zu einer Aufwertung führen soll. Formal gesehen entspricht dieser Fall der Anwendung einer Bewertungsfunktion $f$, welche die Indentitätsfunktion ist.

In einem fünften Schritt S5 wird ein Endwert E als eine Norm des bewerteten Differenzvektors $\vec{B}$ gebildet. Die Norm kann z.B. der geometrischer Mittelwert aus den Komponenten des bewerteten Differenzvektors $\vec{B}$ sein:

$$E = \sqrt{\sum_{i=1}^{4} B_i^2} \quad ,$$

wobei der Index i die einzelnen Komponenten des Vektors $\vec{B}$ bezeichnet. Andere mögliche Normen könnten die Summe der Beträge der einzelnen Komponenten oder die Summe höherer Potenzen der Komponenten sein. Dieser Endwert E wird für den betreffenden Datensatz der Datenbank abgespeichert und der nächste Datensatz wird gelesen. Mit diesem wird wie mit dem ersten verfahren, um auch für den nächsten Datensatz einen Endwert E zu berechnen. Danach wird wieder der nächste Datensatz gelesen und so weiter, solange bis die Bedingung B1 erfüllt ist, daß der letzte Datensatz der Datenbank erreicht und für diesen ein Endwert E errechnet ist.

In einem sechsten Schritt S6 wird eine nach den Endwerten E sortierte Liste der Datensätze ausgegeben, wobei der Datensatz mit dem kleinsten Endwert E zuerst kommt. Vorteilhafterweise werden nicht alle Endwerte E abgespeichert, sondern beispielsweise nur die niedrigsten 10 der bisher berechneten Endwerte. So wird Speicherplatz gespart und die für das Sortieren der Liste benötigte Zeit wird verkürzt. Ausgegeben wird am Ende eine Liste mit den 10 Kraftfahrzeugen, die am besten auf die Datenbankabfrage und damit auf den Wunsch des Benutzers passen.

Die Datenbank in dem Ausführungsbeispiel kann als Kaufberater für den Kauf eines neuen Kraftfahrzeuges dienen. Der Benutzer ist in diesem Fall ein Kunde, der zu einer Datenbankabfrage seine Wunschvorstellung eines neuen Kraftfahrzeuges angibt.

Bei einer besonders vorteilhaften Durchführung der Erfindung wird eine Anpassung der Datenbankabfrage an das Sprachgefühl eines Benutzers vorgenommen. Dies kann durch eine Anpassungsfunktion erfolgt, die aus Angaben des Benutzer ermittelt wird, und die auf die Komponenten des ersten Vektors ($\vec{K}$), des zweiten Vektors ($\vec{A}$), des Differenzvektor ($\vec{D}$) oder des bewerteten Differenzvektors ($\vec{B}$) angewendet wird. Angaben des Benutzers können beispielsweise sein Alter, sein Einkommen, seine Fahrpraxis oder sein bisher genutzter Kraftfahrzeugtyp sein. Daraus kann dann eine Anpassungsfunktion ermittelt werden, welche z.B. bei einem hohen Einkommen den gewünschten Zugehörigkeitswert für Kosten reduziert. Der Vorteil liegt darin, daß eine höhere Übereinstimmung des Abfrageergebnisses mit dem tatsächlichen Wunsch des Benutzers erzielt wird, da seine Lebensumstände und Gewohnheiten, die sein Sprachgefühl bestimmen, berücksichtigt werden.

Mit einer aus Benutzerangaben ermittelten Anpassungsfunktion kann zusätzlich eine Gewichtung der unscharfen sprachlichen Begriffe erfolgen. Gibt ein Benutzer beispielsweise an, er lege besonderen Wert auf ein kostengünstiges Fahrzeug und weniger Wert auf die Sportlichkeit, so kann dies mit Hilfe der Anpassungsfunktion berücksichtigt werden. In dem genannten Fall würde eine Übererfüllung des gewünschten Zugehörigkeitswertes für Kosten durch einen Datensatz mit einer stärkeren Aufwertung des Datensatzes honoriert als eine gleich große Übererfüllung des gewünschten Zugehörigkeitswertes für Sportlichkeit. Umgekehrt würde eine Untererfüllung des gewünschten Zugehörigkeitswertes für Kosten zu einer stärkeren Abwertung des entsprechenden Datensatzes führen als eine gleich große Untererfüllung des gewünschten Zugehörigkeitswertes für Sportlichkeit. Um das zu erreichen kann die Anpassungsfunktion auf die entsprechenden Komponenten des Differenzvektor $\vec{D}$ oder des bewerteten Differenzvektors $\vec{B}$ angewendet werden.

Ein Vorteil des Verfahrens zur Abfrage der Datenbank ist, daß es für Benutzer, die keine Kenntnisse im Umgang mit Datenbanken haben leicht zu handhaben ist, da lediglich an einem Eingabegerät für jeden unscharfen sprachlichen Begriff einer vorbestimmten Menge unscharfer sprachlicher Begriffe ein gewünschter Eingabewert aus einer vorgegebenen Spanne möglicher Eingabewerte angegeben werden muß. An einem Eingabegerät kann dies beispielsweise mittels eines graphisch dargestellten Schiebereglers für jeden unscharfen sprachlichen Begriff vorgenommen werden.

Das Verfahrens zur Abfrage der Datenbank eignet sich auch besonders für Benutzer, die nicht oder nur über geringes spezielles Fachwissen, den Inhalt der Datenbank betreffend, verfügen. So hängt der unscharfe sprachliche Begriff Kosten im Ausführungsbeispiel nicht nur vom Kaufpreis und vom Verbrauch ab, sondern über die Kraftfahrzeugsteuer auch vom Hubraum und über die Kraftfahrzeugsteuer von der Leistung des Kraftfahrzeuges. Ein Benutzer, der eine Datenbankabfrage mit dem unscharfen sprachlichen Begriff Kosten durchführen möchte, braucht über dieses Fachwissen jedoch nicht zu verfügen, da es in der Datenbank bereits enthalten ist.

Wegen der einfachen Handhabbarkeit und der gegenüber herkömmlichen Verfahren höheren Geschwindigkeit, eignet sich das Verfahren zur Abfrage der Datenbank auch besonders zum Einsatz als Online-Dienst insbesondere im Internet.

Andere Einsatzgebiete sind beispielsweise Datenbanken zur Auswahl von Immobilien bei einem Immobilienkauf, zur Auswahl passender Systeme bei der Systemplanung, zur Kaufberatung beim Kauf technischer Geräte oder zur Beratung bei der Auswahl von Versicherungen, Bankleistungen oder Mobilfunktarifen.

**Patentansprüche**

1. Datenbank (DB), die aus einer Anzahl von ersten Datensätzen (EDS) abgeleitet ist und die für jeden der ersten Datensätze (EDS) einen zugehörigen zweiten Datensatz (DS) enthält, welcher für unscharfe sprachliche Begriffe (SB) aus einer vorbestimmten Menge unscharfer sprachlicher Begriffe Zugehörigkeitswerte (WW) enthält, die den Grad angeben, zu dem der jeweilige unscharfe sprachliche Begriff (SB) in seiner Bedeutung auf den zugehörigen ersten Datensatz (EDS) im Vergleich mit den restlichen ersten Datensätzen zutrifft.

2. Datenbank (DB) gemäß Anspruch 1, bei der die in den zweiten Datensätzen (DS) enthaltenen Zugehörigkeitswerte (WW) zu den einzelnen unscharfen sprachlichen Begriffen (SB) durch Anwendung von Mitgliedschaftsfunktionen (MF11, MF12, MF13, MF2) und Bildung von Fuzzy-Interferenzen (FI) nach den Regeln der Fuzzy-Logik Theorie aus den zugehörigen ersten Datensätzen (EDS) abgeleitet sind.

3. Datenbank (DB) gemäß Anspruch 1, bei der die zweiten Datensätze (DS) einen Verweis auf die jeweils zugehörigen ersten Datensätze (EDS) enthalten.

4. Datenbank (DB) gemäß Anspruch 1, bei der die zweiten Datensätze (DS) zumindest einen Teil der Daten der jeweils zugehörigen ersten Datensätze (EDS) enthalten.

5. Verfahren um aus einer Anzahl von ersten Datensätzen (EDS) eine Datenbank (DB) abzuleiten, die für jeden der ersten Datensätze (EDS) einen zugehörigen zweiten Datensatz (DS) enthält, welcher für unscharfe sprachliche Begriffe (SB) aus einer vorbestimmten Menge unscharfer sprachlicher Begriffe Zugehörigkeitswerte (WW) enthält, die den Grad angeben, zu dem der jeweilige unscharfe sprachliche Begriff (SB) in seiner Bedeutung auf den zugehörigen ersten Datensatz (EDS) im Vergleich mit den restlichen ersten Datensätzen zutrifft, mit folgenden Schritten:

   - Auswählen der unscharfen sprachlichen Begriffe (SB);
   - für jeden ausgewählten unscharfen sprachlichen Begriff (SB), Feststellen von Datenfeldern (DF) der ersten Datensätze (EDS), die Einfluß auf den Grad haben, zu dem der betreffende unscharfe sprachliche Begriff (SB) in seiner Bedeutung auf unterschiedliche erste Datensätze (EDS) zutrifft;
   - für jeden ersten Datensatz (EDS), Anwenden von ersten Mitgliedschaftsfunktionen (MF11, MF12, MF13) auf die Daten (DAT) der festgestellten Datenfelder (DF), um von Daten (DAT) einer scharfen logischen Ebene (SLE) zu Eingangstermen (ET) einer sprachlichen, unscharfen logischen Ebene (ULE) zu gelangen;
   - für jeden ersten Datensatz (EDS), Bilden einer Fuzzy-Interferenz (FI) der Eingangsterme (ET) anhand von Regelsätzen (RS), um zu Ausgangstermen (AT) der sprachlichen, unscharfen logischen Ebene (ULE) zu gelangen;
   - für jeden ersten Datensatz (EDS), Anwenden von zweiten Mitgliedschaftsfunktionen (MF2) auf die Ausgangsterme (AT), um von der sprachlichen, unscharfen logischen Ebene (ULE) zu den Zugehörigkeitswerten (WW) zu gelangen, die den Grad angeben, zu dem jeder unscharfe sprachliche Begriff (SB) in seiner Bedeutung auf den jeweiligen ersten Datensatz (EDS) zutrifft.

6. Verfahren nach Anspruch 5, bei dem beim Bilden der Fuzzy-Interferenz (FI) Gewichte (G) der Ausgangsterme (AT) mit einem Multiplikator (DoS) multipliziert werden, um die einzelnen Regelsätze (RS) zu gewichten

7. Verfahren, um auf eine Datenbankabfrage aus einer Anzahl von ersten Datensätzen (EDS) eine Liste von Datensätzen zu erhalten, die am besten auf die Datenbankabfrage passen, bei dem die Datenbankabfrage unscharfe, sprachliche Begriffe (SB) aus einer vorbestimmten Menge unscharfer sprachlicher Begriffe enthält,
   **dadurch gekennzeichnet**, daß
   die Datenbankabfrage auf eine von den ersten Datensätzen (EDS) abgeleitete Datenbank (DB) angewendet wird, die für jeden der ersten Datensätze (EDS) einen zugehörigen zweiten Datensatz (DS) enthält, welcher für die unscharfen sprachlichen Begriffe (SB) Zugehörigkeitswerte (WW) enthält, die den Grad angeben, zu dem der jeweilige unscharfe sprachliche Begriff (SB) in seiner Bedeutung auf den zugehörigen ersten Datensatz (EDS) im Vergleich mit den restlichen ersten Datensätzen zutrifft.

8. Verfahren nach Anspruch 7, dadurch gekennzeichnet, daß eine Anpassung der Datenbankabfrage an das Sprachgefühl eines Benutzers erfolgt.

9. Verfahren nach Anspruch 7, dadurch gekennzeichnet, daß folgende Schritte durchgeführt werden:

a) Formulieren einer Datenbankabfrage durch angeben gewünschter Zugehörigkeitswerte und Bilden eines ersten Vektors ($\vec{K}$), dessen Komponenten die gewünschten Zugehörigkeitswerte sind;
b) Lesen des ersten Datensatzes der in der Datenbank enthaltenen zweiten Datensätze (DS) und Bilden eines zweiten Vektors ($\vec{A}$), dessen Komponenten die Zugehörigkeitswerte des ersten Datensatzes der zweiten Datensätze (DS) sind;
c) Bilden eines Differenzvektors ($\vec{D}$) als Differenz zwischen dem zweiten Vektor ($\vec{A}$) und dem ersten Vektor ($\vec{K}$);
d) Bewerten des Differenzvektors ($\vec{D}$) durch Anwendung einer Bewertungsfunktion ($f$), die auch die Identitätsfunktion sein kann, auf den Differenzvektor ($\vec{D}$), um einen bewerteten Differenzvektor ($\vec{B}$) zu erhalten;
e) Bilden eines Endwertes (E) als eine Norm des bewerteten Differenzvektors ($\vec{B}$);
f) Lesen eines nächsten Datensatzes der in der Datenbank enthaltenen zweiten Datensätze (DS) und erneutes Bilden eines zweiten Vektors ($\vec{A}$), dessen Komponenten die Zugehörigkeitswerte dieses nächsten Datensatzes sind;
g) Wiederholen der Schritte c bis f, bis der letzte Datensatz der in der Datenbank enthaltenen zweiten Datensätze (DS) gelesen und auch für diesen letzten Datensatz ein Endwert (E) errechnet ist;
h) Aufstellen und Ausgeben einer nach den Endwerten (E) sortierten Liste aus zumindest einem Teil der Datensätze, wobei der Datensatz mit dem kleinsten Endwert (E) zuerst kommt.

10. Verfahren nach Anspruch 8 und 9, dadurch gekennzeichnet, das die Anpassung durch eine oder mehrere Anpassungsfunktionen erfolgt, die aus Angaben des Benutzer ermittelt werden, und die auf Komponenten des ersten Vektors ($\vec{K}$), des zweiten Vektors ($\vec{A}$), des Differenzvektor ($\vec{D}$) oder des bewerteten Differenzvektors ($\vec{B}$) angewendet werden.

EP 0 833 263 A2

| NR | Autotyp (TP) | Kosten (SB) | Sicherheit (SB) | Sportlichkeit (SB) | Komfort (SB) |
|---|---|---|---|---|---|
| 1 | Auto 1 1.8 GLI | 3129 | 6624 | 3897 | 3687 |
| 2 | Auto 2 KKU 2.0 | 4194 | 7520 | 6753 | 4267 |
| 3 | Auto 3 GHV 1.7 Z | 3296 | 7288 | 7478 | 5192 |
| 4 | Auto 4 D2 | 3464 | 6885 | 7581 | 5434 |
| 5 | Auto 5 GPS | 5692 | 7862 | 7386 | 4538 |
| 6 | Auto 6 2.3 S | 4683 | 6386 | 6533 | 4871 |
| 7 | Auto 7 HX 1.1 | 4816 | 8397 | 7644 | 5665 |
| ⋮ | ⋮ | | | | |
| N | Auto N KLY | 2567 | 5983 | 4735 | 3762 |

DS · DB · WW

**Fig. 1**

| DF | TP |
|---|---|
| Typenbezeichnung | Auto 1 1.8 GLI |
| Neuwagenpreis | 25,990 DM |
| Kraftstoffverbrauch | 5,3 (90 km/h) - 5,8 (120 km/h) -6,2 (Stadt) l/100 km |
| Hubraum | 1595 ccm |
| Leistung | 51 kW (70 PS) |
| Beschleunigung | 12,3 sec von 0 bis 100 km/h |
| Höchstgeschwindigkeit | 162 km/h |
| Tankinhalt | 40 l |
| Ausstattung | Fahrerairbag, ABS, Servolenkung, G-Kat. |

DAT · EDS

**Fig. 2**

Fig.3

EP 0 833 263 A2

Fig.4

EP 0 833 263 A2

DF

| IF | | | THEN |
|---|---|---|---|
| Beschleunigung | Höchstgeschw. | Leistung | Sportlichkeit |
| mittel | niedrig | niedrig | unsportlich |
| niedrig | niedrig | niedrig | unsportlich |
| niedrig | niedrig | mittel | unsportlich |
| niedrig | niedrig | hoch | unsportlich |
| hoch | niedrig | niedrig | gemütlich |
| mittel | niedrig | hoch | gemütlich |
| hoch | niedrig | mittel | mittel |
| mittel | niedrig | mittel | mittel |
| hoch | niedrig | hoch | sportlich |
| niedrig | mittel | niedrig | gemütlich |
| mittel | mittel | niedrig | gemütlich |
| niedrig | mittel | mittel | gemütlich |
| niedrig | mittel | hoch | gemütlich |
| hoch | mittel | niedrig | mittel |
| mittel | mittel | mittel | mittel |
| mittel | mittel | hoch | mittel |
| hoch | mittel | mittel | sportlich |
| hoch | mittel | hoch | sportlich |
| niedrig | hoch | niedrig | gemütlich |
| niedrig | hoch | hoch | mittel |
| mittel | hoch | niedrig | mittel |
| mittel | hoch | mittel | sportlich |
| niedrig | hoch | mittel | mittel |
| mittel | hoch | hoch | sportlich |
| hoch | hoch | niedrig | mittel |
| hoch | hoch | mittel | sehr sportlich |
| hoch | hoch | hoch | sehr sportlich |

SB

ET                 AT

RS

**Fig. 5**

| Fig.6a | Fig.6b | Fig.6c |

Fig.6d

f(D)

10000

MIN        0        MAX

0

D

Fig.8

Beschleunigung

MF 11

ET

| hoch | 0.34 |
|---|---|
| mittel | 0.59 |
| niedrig | 0.00 |

hoch

niedrig

mittel

mittel

30 in sec (0 → 100 km/h)

Höchstgeschwindigkeit

MF 12

niedrig

hoch

mittel

mittel

| hoch | 0.72 |
|---|---|
| mittel | 0.25 |
| niedrig | 0.00 |

ET

400 in km/h

Leistung

MF 13

ET

niedrig

hoch

mittel

mittel

| hoch | 0.21 |
|---|---|
| mittel | 0.66 |
| niedrig | 0.00 |

500 in PS

Fig. 6a

14

EP 0 833 263 A2

**RS**

| Beschleunigung | Höchstgeschw. | Leistung |
|---|---|---|
| mittel | niedrig | niedrig |
| niedrig | niedrig | niedrig |
| niedrig | niedrig | normal |
| niedrig | niedrig | hoch |
| hoch | niedrig | niedrig |
| mittel | niedrig | hoch |
| hoch | niedrig | normal |
| mittel | niedrig | normal |
| hoch | niedrig | hoch |
| niedrig | mittel | niedrig |
| mittel | mittel | niedrig |
| niedrig | mittel | normal |
| niedrig | mittel | hoch |
| hoch | mittel | niedrig |
| mittel | mittel | normal |
| mittel | mittel | hoch |
| hoch | mittel | normal |
| hoch | mittel | hoch |
| niedrig | hoch | niedrig |
| niedrig | hoch | hoch |
| mittel | hoch | niedrig |
| mittel | hoch | normal |
| niedrig | hoch | normal |
| mittel | hoch | hoch |
| hoch | hoch | niedrig |
| hoch | hoch | normal |
| hoch | hoch | hoch |

ET

**Minimumsuche**

$\min\{0.59;0.25;0.66\}=0.25$
$\min\{0.59;0.25;0.21\}=0.21$
$\min\{0.34;0.25;0.66\}=0.25$
$\min\{0.34;0.25;0.21\}=0.21$

$\min\{0.59;0.72;0.66\}=0.59$

$\min\{0.59;0.72;0.21\}=0.21$

$\min\{0.34;0.72;0.66\}=0.34$
$\min\{0.34;0.72;0.21\}=0.21$

**RS**

| Sportlichkeit | DoS | |
|---|---|---|
| unsportlich | ·0.7 | |
| unsportlich | ·0.5 | |
| unsportlich | ·0.7 | |
| unsportlich | ·0.5 | |
| gemütlich | ·1.0 | |
| gemütlich | ·0.7 | |
| mittel | ·1.0 | |
| mittel | ·0.7 | |
| sportlich | ·0.5 | |
| gemütlich | ·1.0 | |
| gemütlich | ·0.7 | |
| gemütlich | ·0.5 | |
| gemütlich | ·0.5 | |
| mittel | ·1.0 | |
| mittel | ·0.7 | =0.17 |
| mittel | ·0.7 | =0.18 |
| sportlich | ·1.0 | =0.25 |
| sportlich | ·1.0 | =0.21 |
| gemütlich | ·0.5 | |
| mittel | ·0.7 | |
| mittel | ·0.7 | |
| sportlich | ·0.7 | =0.41 |
| mittel | ·0.5 | |
| sportlich | ·0.7 | =0.15 |
| mittel | ·1.0 | |
| sehr sportlich | ·1.0 | =0.34 |
| sehr sportlich | ·1.0 | =0.21 |

AT

**Fig.6b**

AT

| unsportlich | =0 |

AT

| gemütlich | =0 |

AT ... G

| mittel=max{0.17;0.18} | = 0.18 |

AT ... G

| sportlich=max{0.21;0.25;0.41;0.15} | = 0.41 |

AT ... G

| sehr sportlich=max{0.34;0.21} | = 0.34 |

unsportlich gemütlich mittel sportlich sehr sportlich

MF2

1

0

0 7970 10000

Sportlichkeit

Fig.6c

EP 0 833 263 A2

**Fig. 7**

S1 — Abfrage $\vec{K}$

S2 — Lese ersten Datensatz $\vec{A}$

S6 — Lese nächsten Datensatz $\vec{A}$

S3 — Bilde Differenz $\vec{D} = \vec{A} - \vec{K}$

S4 — Bewertung $\vec{B} = f(\vec{D})$

S5 — Endwert $E = \sqrt{\sum_i B_i^2}$

B1 — letzter Datensatz erreicht?

Nein

Ja

S7 — Stelle Liste nach E auf